# FASCICULE DE BREVET EUROPEEN

(11) **EP 0 718 617 B1**
(45) Date de publication et mention de la délivrance du brevet: **11.09.2002**
(21) Numéro de dépôt: 95402888.2
(22) Date de dépôt: 20.12.1995
(51) Int. Cl.: G01N 15/08

(54) **Dispositif modulaire pour tester des échantillons de matériaux poreux en présence de fluides polyphasiques**
Modulare Vorrichtung zum Testen von Proben aus porösem Material in Gegenwart mehrphasiger Fluide
Modular device for testing porous samples in presence of multiphase fluids

(30) Priorité: 21.12.1994 FR 9415546
(43) Date de publication de la demande: 26.06.1996
(73) Titulaire: INSTITUT FRANCAIS DU PETROLE, 92500 Rueil Malmaison (FR)
(72) Inventeur: Deruyter, Christian, F-92500 Rueil-Malmaison (FR); Prevot, Sylvain, F-92160 Antony (FR); Kalaydjian, François, F-92500 Rueil-Malmaison (FR)

(56) Documents cités:
- US-A- 4 599 891
- US-A- 4 734 649
- US-A- 4 996 872
- US-A- 5 325 723

## Description

La présente invention a pour objet une cellule modulaire pour tester des échantillons de matériaux poreux en présence de fluides.

Le dispositif selon l'invention convient pour tester par exemple des échantillons géologiques et déterminer différents paramètres tels que la pression capillaire des roches dans des phases de drainage ou d'imbibition, leurs indices de mouillabilité, leurs perméabilités relatives, leurs indices de résistivité etc.

Le dispositif selon l'invention trouve des applications notamment dans le domaine pétrolier pour déterminer les caractéristiques des roches qui ont été prélevées dans des formations recélant ou susceptibles de recéler des hydrocarbures

Le dispositif trouve aussi des applications en génie civil par exemple pour faire de l'hydrologie de terrains pour évaluer leur degré de pollution par exemple, ou encore dans le bâtiment pour tester des matériaux de construction afin notamment de décider de traitements hydrofuges par exemple.

Pour déterminer la répartition des volumes d'huile et de gaz dans un gisement ou un aquifère, il faut connaître en tout point les valeurs des saturations qui dépendent de paramètres tels que la mouillabilité et la tension interfaciale. A cet effet, on détermine la mouillabilité des roches vis à vis de l'eau et de l'huile qui peuvent y être contenues. A cet effet, il faut procéder à des opérations de drainage de la roche c'est-à-dire à un déplacement des fluides visant à diminuer la saturation en eau, suivi d'opérations d'imbibition, en désignant par ce terme un déplacement des fluides permettant d'augmenter la saturation en eau (Sw) de la roche. La pression capillaire en un point d'un matériau poreux contenant deux fluides tels que de l'eau et de l'huile en phase continue, se définit, on le rappelle, comme la différence Pc à l'équilibre entre la pression P(huile) de l'huile et celle P(eau) de l'eau.

La connaissance de différents paramètres et notamment de la mouillabilité des roches, est utile notamment quand on doit procéder à une récupération assistée d'une formation, en drainant les effluents qu'elle contient par une injection d'un fluide sous pression, et que l'on doit par des tests préalables choisir le fluide (eau ou gaz) qui convient le mieux pour déplacer les effluents.

Pour mener à bien ces opérations de drainage et d'imbibition, en laboratoire, différents types de dispositifs sont utilisés. Les barreaux d'échantillons sont placés généralement dans une cellule. A ses extrémités opposées, la cellule comporte deux embouts communiquant avec des moyens pour établir un déplacement de fluides sous pression au travers de l'échantillon testé. Des moyens de mesure sont placés en différents emplacements le long du barreau pour mesurer différents paramètres: pressions, saturations, résistivité électrique etc. Le barreau d'échantillon peut être placé à l'intérieur d'une gaîne de confinement en élastomère comprimée par une injection de fluide sous pression.

Différentes dispositifs de mesure de paramètres physiques d'échantillons solides poreux sont décrits par exemple dans les demandes de brevet FR.2.603.040, E.N 93/09.481 ou E.N 94/10.783 du demandeur ou bien encore les brevets US 4 868 751, 5.506.542 ou 5 069 065.

Le dispositif selon l'invention permet de réaliser des déplacements de fluides au travers d'un échantillon solide plus ou moins poreux dans le but de mesurer certains de ses paramètres physiques. Il comporte une cellule de confinement de l'échantillon constituée d'un corps de cellule tubulaire pourvu d'un embout à chacune de ses deux extrémités, et des moyens pour obtenir un déplacement de fluides sous pression au travers de l'échantillon.

Il est caractérisé en ce qu'il comporte au moins un manchon de raccordement pourvu de deux cavités opposées et deux butées d'extrémité associées respectivement aux deux embouts par des premiers moyens de fixation, pourvues chacune d'une extension tubulaire dont la section est adaptée à celle des cavités de chaque manchon de raccordement, des deuxièmes moyens de fixation pour plaquer chaque butée d'extrémité contre un manchon de raccordement, et des moyens d'étanchéité pour isoler de l'extérieur la cellule de confinement, ladite cellule de confinement étant délimitée par le(s) manchon(s) de raccordement et lesdites butées d'extrémité.

Suivant un premier mode de réalisation, chaque butée d'extrémité comporte des moyens de fixation à un manchon de raccordement.

Suivant un autre mode de réalisation, le dispositif comporte au moins une barre d'assemblage pour relier entre elles des butées d'extrémité.

Le dispositif comporte par exemple au moins deux manchons de raccordement et au moins une section tubulaire de longueur déterminée intercalé entre deux manchons de raccordement, le diamètre des parties terminales de cette section tubulaire étant adapté à celle des cavités de chaque manchon de raccordement.

Le dispositif peut comporter ainsi plusieurs sections tubulaires intercalées entre plusieurs manchons de raccordement, éventuellement de longueurs différentes choisis parmi un jeu de sections disponibles, de façon à obtenir une cellule de longueur adaptée à celle du barreau d'échantillon poreux à étudier.

Le dispositif peut comporter également une gaine élastique délimitant avec les embouts, une enceinte de confinement, et des moyens de pression pour plaquer la gaîne contre l'échantillon poreux.

Suivant un mode de réalisation, le dispositif peut comporter une ou plusieurs membranes semi-perméables disposées au voisinage des embouts de la cellule.

Suivant un mode de réalisation avantageux, chaque manchon de raccordement comporte au moins un appendice radial un alésage radial et des moyens pour établir une connexion au travers de cet appendice entre l'intérieur de la cellule et un appareil extérieur qui peut être par exemple un instrument de mesure tel qu'un capteur de pression ou un moyen d'injection d'un gaz. Ces moyens de connexion peuvent être par exemple un tube muni d'un embout de connexion vissable dans un alésage ménagé au travers de chaque appendice radial et éventuellement muni d'une vanne-pointeau et/ou de membranes semi-perméables, ce tube communiquant avec une source de gaz ou une entrée de capteur de pression.

Dans le cas où l'échantillon est confiné par une gaine élastique, chaque manchon de raccordement comporte un logement pour un oeillet rigide traversant la gaîne, permettant la mise en communication du canal radial de chaque manchon avec l'échantillon.

Le dispositif selon l'invention, de par sa conception modulaire, peut être configuré pour recevoir un échantillon plus ou moins long. Les manchons de raccordement que l'on peut intercaler sur la longueur de l'échantillon, permettent l'adaptation de moyens d'injection et/ou de mesure très divers pour répondre à des conditions expérimentales imposées.

D'autres caractéristiques et avantages du dispositif selon l'invention, apparaîtront à la lecture de la description ci-après de modes de réalisation décrits à titre d'exemples non limitatifs, en se référant aux dessins annexés où :
- la Fig.1 montre un premier mode de réalisation du dispositif; et
- la Fig.2 montre un deuxième mode de réalisation constitué par assemblage de plusieurs sections tubulaires et plusieurs manchons de raccordement intercalés pour allonger une cellule de confinement.

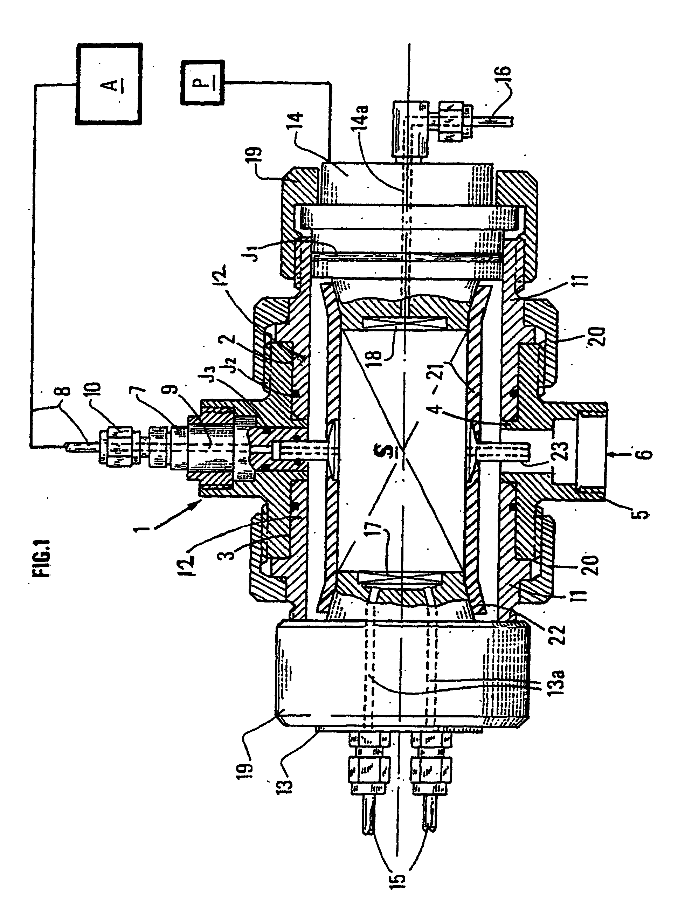

Suivant le mode de réalisation de la Fig.1, le dispositif comporte un manchon de raccordement tubulaire 1 pourvu de deux cavités cylindriques 2, 3 de part et d'autre d'un épaulement central 4. Le manchon comporte par exemple deux appendices radiaux 5 dans le prolongement l'un de l'autre, pourvus chacun d'un alésage central 6 dans lequel on peut venir visser l'embout 7 d'un tube 8. Cet embout radial 7 comporte par exemple une vanne-pointeau 9. On peut l'actionner par la rotation d'une bague 10 et ainsi contrôler la mise en communication avec le tube 8.

Le dispositif comporte aussi deux butées d'extrémité 11 pourvues chacune d'une extension tubulaire 12 adaptée à venir s'emboiter dans les cavités 2, 3 de chaque manchon de raccordement 1. A chaque extrémité, le dispositif comporte un embout 13, 14 traversé de part en part par un ou plusieurs canaux 13A, 14A sur lesquels on peut connecter des canalisations 15, 16 reliées à des circuits de pompage de fluides (non représentés).

Entre l'échantillon S à tester et les deux embouts 13, 14 on peut intercaler éventuellement des membranes semi-perméables 17, 18 d'épaisseur variable. Elles sont choisies en fonction des fluides à déplacer à l'intérieur de l'échantillon.

Sur chaque embout est fixé une bague filetée 19 adaptée à être vissée sur une butée d'extrémité 11, avec pour effet d'amener chacun des embouts 13, 14 en appui sur une face terminale de l'échantillon S. Une autre bague filetée 20 solidaire en translation de chaque butée d'extrémité permet l'emboîtement des extensions tubulaires 12 des butées 11 jusqu'au fond des cavités dans le manchon 1.

Pour certaines applications où une pression radiale doit être appliquée à l'échantillon S, celui-ci est placé dans une gaîne élastique 21. Chacun des embouts 13, 14 comporte une partie terminale tronconique adaptée à s'engager sous la gaine à chacune de ses extrémités de façon à délimiter avec elle une cellule de confinement. Par un orifice (non représenté), l'espace annulaire autour de la gaine 21 est mis en communication avec des moyens P délivrant un fluide sous pression. L'embout 7 fixé dans chaque appendice radial 5 suivant son axe, comporte un logement pour un oeillet rigide 23 serti au travers de la gaîne 21 de façon à mettre l'échantillon S à l'intérieur en communication avec la canalisation 8.

Des joints d'étanchéité J1, J2, J3, J4 sont interposés entre les embouts 13, 14, les butées 11, les manchons 1 ainsi qu'autour de chaque embout radial 7, pour isoler l'intérieur de la cellule de confinement du milieu extérieur.

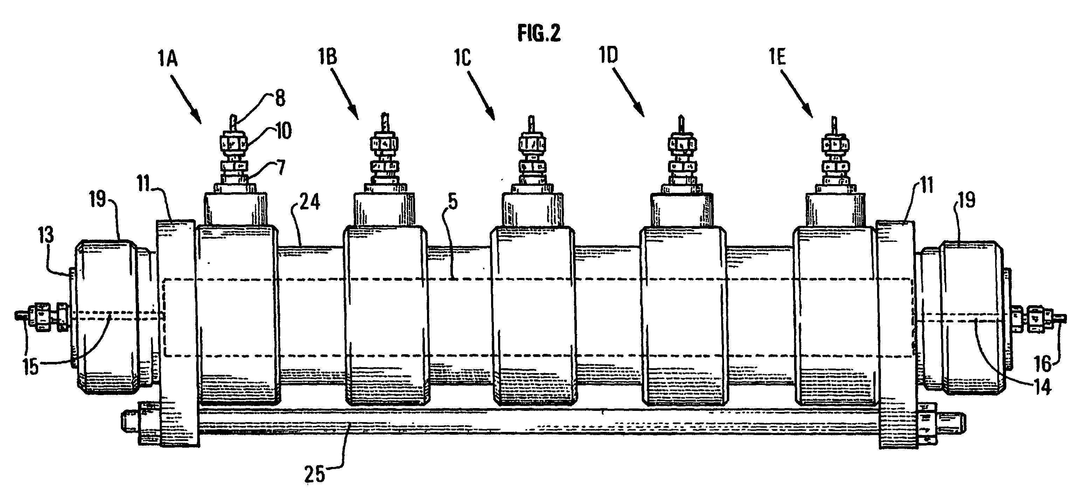

Suivant le mode de réalisation de la Fig.2, la cellule de confinement des échantillons peut être allongée à volonté par interposition d'une ou plusieurs sections tubulaires 24 de diamètre extérieur sensiblement identique à celui des extensions tubulaires précédentes 12, de façon à venir s'emboiter dans les cavités symétriques de chaque manchon de raccordement 1. Les différentes pièces constituant le dispositif peuvent être rendues solidaires comme précédemment par vissage de bagues 20 (Fig.1) aux manchons d'extrémité 1A, 1E. Un autre mode de solidarisation consiste comme représenté ici, à réunir l'une à l'autre les butées d'extrémité 11 par une ou plusieurs barres d'accouplement 25.

Avec quatre sections tubulaires courtes interposées entre cinq manchons de raccordement 11, comme représenté sur la Fig.2 à titre d'exemple, on peut constituer une cellule de mesure pour un échantillon de grande longueur avec cinq points d'accès radiaux répartis sur sa longueur, en communication contrôlée avec autant de canalisations 8. On peut modifier la configuration pour une longueur d'échantillon donnée, en diminuant le nombre de manchons 1 intercalés et en allongeant les sections tubulaires intercalées.

Les canalisations 8 sont utilisées pour relier l'intérieur de la cellule au niveau de chaque appendice 5 avec un appareil A. Il peut s'agir par exemple d'un capteur de pression, de façon à mesurer la pression des fluides à l'intérieur de l'échantillon à différents stades d'opérations de drainage ou d'imbibition.

Comme décrit dans la demande de brevet EN 94/15376 du demandeur, on peut rendre ces piquages de pression sélectifs en interposant une ou plusieurs membranes dans le canal 9 de chaque embout 7 (Fig.1).

L'appareil A relié par les canalisations 8, peut également être une source de gaz sous pression dans le cadre d'opérations de mesure de paramètres physiques d'un échantillon où l'on déplace des fluides polyphasiques.

## Revendications

1. Dispositif pour réaliser des déplacements de fluides au sein d'un échantillon solide plus ou moins poreux (S) dans le but de mesurer certains de ses paramètres physiques, comportant une cellule de confinement de l'échantillon pourvue d'embouts à ses deux extrémités opposées, et des moyens pour obtenir un déplacement de fluides sous pression au travers de l'échantillon, **caractérisé en ce qu'**il comporte au moins un manchon de raccordement (1) pourvu de deux cavités opposées (2, 3), deux butées d'extrémité (11) associées respectivement aux deux embouts (13, 14) par des premiers moyens de fixation (19), pourvues chacune d'une extension tubulaire (12) de section adaptée à celle des cavités opposées (2, 3) de chaque manchon de raccordement (1), des deuxièmes moyens de fixation (20) pour plaquer chaque butée d'extrémité (11) contre le manchon de raccordement (1), et des moyens d'étanchéité (J) pour isoler de l'extérieur la cellule de confinement, ladite cellule de confinement étant délimitée par le(s) manchon(s) de raccordement (1) et lesdites butées d'extémité (11).

2. Dispositif selon la revendication 1, **caractérisé en ce qu'**il comporte au moins une barre d'assemblage (25) pour relier entre elles les butées d'extrémité (11).

3. Dispositif selon la revendication 2, **caractérisé en ce qu'**il comporte au moins deux manchons de raccordement (1) et au moins une section tubulaire (24) de longueur déterminée, intercalée entre deux manchons de raccordement (1), la section des parties terminales de cette section tubulaire (24) étant adaptée à celle des cavités (3) de chaque manchon de raccordement (1).

4. Dispositif selon la revendication 3, **caractérisé en ce qu'**il comporte plusieurs sections tubulaires (24) intercalées entre plusieurs manchons de raccordement (1), choisis parmi un jeu de sections tubulaires de longueurs identiques ou de différentes longueurs, de façon à obtenir une cellule de longueur adaptée à celle du barreau d'échantillon poreux à étudier.

5. Dispositif selon l'une des revendications précédentes, **caractérisé en ce qu'**il comporte une gaîne élastique (21) délimitant avec les embouts (13, 14), l'enceinte de confinement, et des moyens de pression (P) pour plaquer la gaîne contre l'échantillon poreux (S).

6. Dispositif selon la revendication 5, **caractérisé en ce que** chaque manchon de raccordement (1) comporte un logement pour un oeillet rigide (23) traversant la gaîne (21), permettant la mise en communication du canal radial de chaque manchon avec l'échantillon.

7. Dispositif selon l'une des revendications précédentes, **caractérisé en ce qu'**il comporte une ou plusieurs membranes semi-perméables (17) disposées au voisinage d'au moins un embout (13, 14) de la cellule.

8. Dispositif selon l'une des revendications précédentes, **caractérisé en ce que** chaque manchon de raccordement (1) comporte au moins un appendice radial (5) pourvu d'un alésage radial (6) des moyens (7-10) pour établir une connexion au travers de cet appendice (5) entre l'intérieur de la cellule et un appareil extérieur (A).

9. Dispositif selon la des revendication précédente, **caractérisé en ce que** les moyens de connexion (7-10) comportent un tube muni d'un embout de connexion associé à une vanne, qui est vissable dans un alésage ménagé au travers de chaque appendice radial, ce tube communiquant avec le dit appareil extérieur (A) constitué d'une source de gaz ou d'une entrée de capteur de pression.

10. Dispositif selon la revendication précédente, **caractérisé en ce que** l'embout de connexion comporte au moins une membrane semi-perméable.

## Patentansprüche

1. Vorrichtung zur Herbeiführung von Verdrängungsbewegungen von Fluiden inmitten einer festen, mehr oder weniger porösen Probe (S), mit dem Ziel, gewisse ihrer physikalischen Parameter zu messen, eine die Probe einschließende Zelle umfassend, die mit Spitzenden an ihren beiden gegenüberliegenden Enden versehen ist sowie Mittel, um eine Verdrängungsbewegung von Fluiden unter Druck durch die Probe hindurch zu erhalten, **dadurch gekennzeichnet, dass** sie wenigstens eine Verbindungshülse (1) umfasst, die mit zwei einander gegenüber liegenden Hohlräumen (2, 3) ausgestattet ist, wobei zwei Endanschläge (11) jeweils den beiden Spitzenden (13, 14) durch erste Befestigungsmittel (19) zugeordnet sind, die je mit einer röhrenförmigen Verlängerung (12) von einem Querschnitt versehen sind, der an den der gegenüberliegenden Hohlräume (2, 3) jeder Verbindungshülse (1) angepasst ist, sowie zweite Befestigungsmittel (20) umfassend, um jeden Endanschlag (11) gegen die Verbindungshülse (1) zu pressen und Dichtungsmittel (J), um von außen her die einschließende Zelle zu isolieren und wobei die einschließende Zelle durch die Verbindungshülse(n) (1) und diese Endanschläge (11) begrenzt ist.

2. Vorrichtung nach Anspruch 1, **dadurch gekennzeichnet, dass** sie wenigstens eine Montagestange (25) umfasst, um die Endanschläge (11) untereinander zu verbinden.

3. Vorrichtung nach Anspruch 2, **dadurch gekennzeichnet, dass** sie wenigstens zwei Verbindungshülsen (1) und wenigstens einen röhrenförmigen Abschnitt (24) bestimmter Länge umfasst, der zwischen zwei Verbindungshülsen (1) zwischengeschoben ist, wobei der Querschnitt der beiden Endteile dieses röhrenförmigen Abschnittes (24) an den der Ausnehmungen (3) jeder Verbindungshülse (1) angepasst ist.

4. Vorrichtung nach Anspruch 3, **dadurch gekennzeichnet, dass** sie mehrere röhrenförmige zwischen mehrere Verbindungshülsen (1) zwischengesetzte Abschnitte (24) umfasst, die aus einem Satz röhrenförmiger Abschnitte identischer oder unterschiedlicher Längen derart gewählt sind, dass eine Zelle von einer Länge erhalten wird, die an die der Stange für die poröse zu untersuchende Probe angepasst ist.

5. Vorrichtung nach einem der vorhergehenden Ansprüche, **dadurch gekennzeichnet, dass** sie eine elastische Hülle (21), die mit den Spitzenden (13, 14) das begrenzende Gefäß begrenzt, und Druckmittel (P), um die Hülle gegen die poröse Probe (S) zu pressen, umfasst.

6. Vorrichtung nach Anspruch 5, **dadurch gekennzeichnet, dass** jede Verbindungshülse (1) ein Lager für ein steifes die Hülle (21) durchsetzendes Auge (23) umfasst, wodurch es möglich wird, den Radialkanal jeder Hülse mit der Probe in Verbindung zu setzen.

7. Vorrichtung nach einem der vorhergehenden Ansprüche, **dadurch gekennzeichnet, dass** sie eine oder mehrere semi-permeable Membranen (17) umfasst, die benachbart wenigstens einem Spitzende (13, 14) der Zelle angeordnet sind.

8. Vorrichtung nach einem der vorhergehenden Ansprüche, **dadurch gekennzeichnet, dass** jede Verbindungshülse (1) wenigstens einen Radialansatz (5) umfasst, der mit einer Radialbohrung (6) und Mitteln (7-10) versehen ist, um eine Verbindung quer durch diesen Ansatz (5) zwischen dem Inneren der Zelle und einem äußeren Apparat (A) herzustellen.

9. Vorrichtung nach dem vorhergehenden Anspruch, **dadurch gekennzeichnet, dass** die Verbindungsmittel (7-10) ein Rohr umfassen, das mit einem einem Ventil zugeordneten Verbindungspitzende versehen ist, das in eine Bohrung schraubbar ist, die durch jeden Radialansatz hindurch vorgesehen ist, wobei dieses Rohr mit diesem äußeren Apparat (A) in Verbindung steht, der aus einer Gasquelle oder einem Druckgebereingang besteht.

10. Vorrichtung nach dem vorhergehenden Anspruch, **dadurch gekennzeichnet, dass** das Verbindungsspitzende wenigstens eine semi-permeable Membran umfasst.

## Claims

1. Device for producing displacements of fluids in a more or less porous solid sample (S) with the aim of measuring certain of its physical parameters, comprising a cell for confinement of the sample provided with end pieces at its two opposite ends, and means for obtaining displacement of fluids under pressure through the sample, **characterised in that** it comprises at least one connecting sleeve (1) provided with two opposing cavities (2, 3), two end stops (11) associated respectively with the two end pieces (13, 14) by first fixing means (19), each provided with a tubular extension (12) of section adapted to that of the opposing cavities (2, 3) of each connecting sleeve (1), second fixing means (20) for pressing each end stop (11) against the connecting sleeve (1), and sealing means (J) for isolating the confinement cell from the outside, said confinement cell being delimited by the connecting sleeve (s) (1) and said end stops (11).

2. Device according to claim 1, **characterised in that** it comprises at least one assembling bar (25) to connect the end stops (11) to one another.

3. Device according to claim 2, **characterised in that** it comprises at least two connecting sleeves (1) and at least one tubular section (24) of given length, inserted between two connecting sleeves (1), the section of the end portions of this tubular section (24) being adapted to that of the cavities (3) of each connecting sleeve (1).

4. Device according to claim 3, **characterised in that** it comprises a plurality of tubular sections (24) inserted between a plurality of connecting sleeves (1), selected from a set of tubular sections of identical lengths or of different lengths, so as to obtain a cell of length adapted to that of the bar of porous sample to be studied.

5. Device according to one of the preceding claims, **characterised in that** it comprises an elastic sheath (21) delimiting with the end pieces (13, 14) the confinement enclosure, and pressure means (P) for pressing the sheath against the porous sample (S).

6. Device according to claim 5, **characterised in that** each connecting sleeve (1) comprises a housing for a rigid eye (23) passing through the sheath (21), allowing communication of the radial channel of each sleeve with the sample.

7. Device according to one of the preceding claims, **characterised in that** it comprises one or more semi-permeable membranes (17) disposed in the vicinity of at least one end piece (13, 14) of the cell.

8. Device according to one of the preceding claims, **characterised in that** each connecting sleeve (1) comprises at least one radial appendix (5) provided with a radial bore (6) and means (7-10) for establishing a connection through this appendix (5) between the inside of the cell and an outside apparatus (A).

9. Device according to the preceding claim, **characterised in that** the connecting means (7-10) comprise a tube fitted with a connecting end piece associated with a valve which can be screwed into a bore formed through each radial appendix, this tube communicating with said outside apparatus (A) constituted by a source of gas or by an inlet for a pressure sensor.

10. Device according to the preceding claim, **characterised in that** the connecting end piece comprises at least one semi-permeable membrane.
